# EUROPÄISCHE PATENTANMELDUNG

(11) **EP 0 990 859 A2**
(43) Veröffentlichungstag der Anmeldung: **05.04.2000**
(21) Anmeldenummer: 99114412.2
(22) Anmeldetag: 22.07.1999
(51) Int. Cl.: F24F 5/00

(54) **Belüftungs- und Entlüftungsanlage**

(30) Priorität: 29.09.1998 DE 19844578
(71) Anmelder: Baumann, Roland, 89081 Ulm (DE)
(72) Erfinder: Baumann, Roland, 89081 Ulm (DE)
(74) Vertreter: Lorenz, Werner, Dipl.-Ing.

(57) **Zusammenfassung**

Eine Belüftungs- und Entlüftungsanlage (1), insbesondere mit Wärmespeicherelementen (2), weist wenigstens ein Gehäuse (5) und eine Luftfördereinrichtung (3) auf. Das Gehäuse (5) hat wenigstens ein akustisch mit dem Innenbereich des Gehäuses (5) verbundenes Gehäuseelement (8). Dieses Gehäuseelement (8) besteht ganz oder zu seinem wenigstens annähernd größten Teil aus einem Material mit schallabsorbierenden Eigenschaften.

## Beschreibung

Die Erfindung betrifft eine Belüftungs- und Entlüftungsanlage, insbesondere mit Wärmespeicherelementen, wobei die Belüftungs- und Entlüftungsanlage wenigstens ein Gehäuse und wenigstens eine Luftfördereinrichtung aufweist.

In der DE 93 01 812 U1 ist eine gattungsgemäße Anlage mit Wärmespeicherelementen beschrieben.

Auch die DE 41 04 423 C2 und die DE 36 13 942 A1 beschreiben ähnliche Belüftungs- und Entlüftungsanlagen, die ebenfalls mit Wärmespeicherelementen zur Wärmerückgewinnung ausgestattet sind.

Allgemein bekannt sind auch Belüftungs- und Entlüftungsanlagen ohne Wärmespeicherelemente, wie sie vorzugsweise für Toilettenräume oder als reine Abluftanlagen auch für Küchenräume eingesetzt werden.

Die Funktionsweise solcher Anlagen, insbesondere solcher mit Wärmespeicherelementen, ist allgemein sehr gut. Die sogenannte kontrollierte Wohnungslüftung, insbesondere mit Wärmerückgewinnung, die mit solchen Belüftungs- und Entlüftungsanlagen durchgeführt wird, schafft ein sehr gutes Raumklima in den mit ihr belüfteten Innenräumen.

Insbesondere in der winterlichen Heizperiode bieten die Belüftungs- und Entlüftungsanlagen mit Wärmespeicherelementen zur Wärmerückgewinnung neben dem guten Raumklima auch große energetische Vorteile gegenüber einer oft noch üblichen 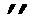 Fensterlüftung" der Innenräume.

Allerdings erfordern sämtliche Belüftungs- und Entlüftungsanlagen üblicherweise einen Wanddurchbruch oder ähnliches in den sie eingebaut werden können. Damit besteht also immer eine Verbindung zwischen dem belüfteten Innenraum und einem Außenbereich durch die Gebäudewand hindurch. In diesen den Innenraum und den Außenbereich verbindenden Mauerdurchbruch wird die Belüftungs- und Entlüftungsanlage direkt eingebaut. Durch die mehr oder weniger direkte Verbindung, durch die Belüftungs- und Entlüftungsanlage hindurch von dem Innenraum zu dem Außenbereich, können nun aber Schallwellen leicht in den mit einer solchen Belüftungs- und Entlüftungsanlage belüfteten Innenraum gelangen.

Weiterhin erzeugt auch die Belüftungs- und Entlüftungsanlage durch Strömungs- und Antriebsgeräusche selbst Schallwellen. zusammen mit den Schallwellen des Außenbereichs kann dies zu einer teilweise erheblichen Lärmbelastung in dem Innenraum führen. Diese kann unter Umständen mit der durch ein geöffnetes oder schräg gestelltes Fenster eindringenden Geräuschkulisse vergleichbar sein.

Selbst wenn die Belüftungs- und Entlüftungsanlage nicht in Betrieb ist und somit der von ihr selbst erzeugte Eigenschall keine Rolle spielt, dringt durch die Belüftungs- und Entlüftungsanlage der Außenschall in den Innenraum vor.

Durch sehr aufwendige, verschließbare Klappensysteme die in die Belüftungs- und Entlüftungsanlage integriert werden, versucht man teilweise das Eindringen von Außenschall in den Innenraum zu reduzieren. Damit läßt sich die Lärmbelastung durch den Außenschall zumindest dann verringern, wenn die Belüftungs- und Entlüftungsanlage nicht betrieben wird.

Die ideale Funktionsweise der beschriebenen Belüftungs- und Entlüftungsanlage, insbesondere mit Wärmespeicherelementen, erfordert jedoch einen wenigstens annähernd kontinuierlichen Betrieb. Da die Klappensysteme während des Betriebs natürlich nicht geschlossen werden können, kann so der Außenlärm trotz des Klappensystems fast die ganze Zeit in den Innenraum vordringen.

In der DE 298 08 237 U1 wurde das Problem der Lärmtelastung bei derartigen Belüftungs- und Entlüftungsanlagen bereits erkannt. Dort wird eine Belüftungs- und Entlüftungsanlage mit Wärmerückgewinnung beschrieben, die so in einem Mauerdurchbruch für einen Rolladenkasten integriert ist, daß die Außenluft nur über den Rolladenkasten in den Innenraum gelangt und so der Außenlärm wenigstens nicht auf direktem Wege in den Innenraum vordringen kann.

Diese Art des Einbaus einer Belüftungs- und Entlüftungsanlage läßt sich allerdings nur zusammen mit einem Neueinbau eines entsprechenden Rolladenkastens realisieren und weist nicht die akustischen Ergebnisse auf, die sich von einer solchen Konstruktion erhoffen ließen.

Aus der Fachzeitschrift "Bauphysik 20 (1998), Heft 6" ist es bekannt, zur Lösung raumakustischer Probleme bzw. zur Verhinderung von Nachhall, transparente Bauteile mit einer Mikroperforation als sogenannte mikroperforierte Absorber (MPA) einzusetzen. Diese mikroperforierten Absorber sind in der Lage, den wirksamen Strömungswiderstand zur Reduktion der unerwünschten akustischen Effekte in die Perforation selbst hinein zu verlegen. So kann eine Schallabsorption realisiert werden, welche keine offenporigen Schaumstoffe, Fasermaterialien oder dergleichen benötigt.

Es ist daher die Aufgabe der Erfindung, eine Belüftungs- und Entlüftungsanlage, insbesondere mit Wärmespeicherelementen, zu schaffen, bei der möglichst wenig Schall in den mit ihr belüfteten Innenraum gelangen kann.

Erfindungsgemäß wird diese Aufgabe dadurch gelöst, daß das Gehäuse wenigstens ein akustisch mit dem Innenbereich des Gehäuses verbundenes Gehäuseelement aufweist, wobei das Gehäuseelement ganz oder zu seinem wenigstens annähernd größten Teil aus einem Material mit schallabsorbierenden Eigenschaften besteht.

Durch die Ausführung eines Gehäuseelements des Gehäuses der Belüftungs- und Entlüftungsanlage aus schallabsorbierendem Material werden in vorteilhafter Weise sowohl die von außen eindringenden Schallwellen, als auch die durch Strömungs- und Antriebsgeräusche in der Belüftungs- und Entlüftungsanlage selbst entstehende Schallwellen größtenteils absorbiert. Dazu muß lediglich sichergestellt werden, daß die Schallwellen durch eine akustische Verbindung, z.B. durch Öffnungen, zu dem Gehäuseelement mit schallabsorbierenden Eigenschaften gelangen können.

Dadurch kann der Lärmpegel in dem mit einer erfindungsgemäßen Belüftungs- und Entlüftungsanlage belüfteten Innenraum drastisch gesenkt werden. Neben den, insbesondere bei der Belüftungs- und Entlüftungsanlage mit Wärmespeicherelementen, vorhandenen energetischen Vorteilen, lassen sich jetzt auch Vorteile bezüglich der Lärmbelastung gegenüber der klassischen 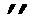 Fenster-Lüftung" erzielen.

In einer sehr günstigen Ausführungsform der Belüftungs- und Entlüftungsanlage kann diese eine zylindrische Bauform aufweisen. Einerseits lassen sich runde Mauerdurchbrüche leichter realisieren, so daß eine solche zylindrische Bauform der Belüftungs- und Entlüftungsanlage sich ideal für das Nachrüsten von Altbauten eignet, andererseits ergeben sich energetische Vorteile bei der Ausführungsform mit Wärmespeicherelementen. Die Wärmespeicherelemente sind üblicherweise meist als rippenförmige Metallelemente ausgeführt und können nur in den von einen Luftstrom direkt angeströmten Bereichen funktionieren. Da die Luftfördereinrichtung im Allgemeinen ein rundes, axial wirkendes Flügelrad aufweist, wird sowieso nur ein ringförmiger Bereich der Wärmespeicherelemente von der geförderten Luft angeströmt. Der im Querschnitt runde Aufbau der Belüftungs- und Entlüftungsanlage spart also Platz, Material und weist durch das Einsparen ungenutzter Fläche der Wärmespeicherelemente energetische Vorteile auf.

In einer weiteren, besonders vorteilhaften Ausführungsform der Anlage kann darüberhinaus eine zentral angeordnete Hülle, welche die Antriebseinheit der Luftfördereinrichtung umschließt, an ihrer Außenseite ein Material mit schallabsorbierenden Eigenschaften aufweisen.

In der Kombination mit dem oben beschrieben Gehäuseelement aus schallabsorbierendem Material läßt sich so eine Belüftungs- und Entlüftungsanlage konzipieren, die den Lärmpegel in den mit ihr belüfteten Innenräumen weiter reduziert.

Sollte die Dämpfung des Lärmpegels, z.B. durch eine extrem große Außenschallbelastung, noch nicht ausreichen, so können in einer weiteren vorteilhaften Ausführungsform der Erfindung zylinderförmige Elemente aus einem Material mit schallabsorbierenden Eigenschaften in die Belüftungs- und Entlüftungsanlage integriert werden.

In einer besonders günstigen Ausführungsform der Erfindung kann das Material mit den schallabsorbierenden Eigenschaften bzw. das Gehäuseelement und die Schall-Leitelemente selbst eine Mikroperforation aufweisen. Damit können diese Elemente direkt als mikroperforierte Absorber dienen, wobei sowohl Kunststoffe als auch Metalle oder ähnliches als Material für das Gehäuse und zumindest die Oberflächen der in dem Gehäuse und dem Gehäuseinnenraum enthaltenen Elemente eingesetzt werden können. Für die Schall-Leitelemente, welche in einer besonders günstigen Ausführungsform gleichzeitig als Wärmespeicherelemente vorgesehen werden können, ist dabei der Einsatz von mikroperforierten Metallen oder vergleichbaren, gut wärmeleitenden Materialien denkbar.

Weitere vorteilhafte Ausgestaltungen und Weiterbildungen der Erfindung ergeben sich aus den Unteransprüchen und aus den nachfolgend anhand der Zeichnungen prinzipmäßig dargestellten Ausführungsbeispielen.

Es zeigt:
- Fig. 1: einen Querschnitt durch eine Belüftungs- und Entlüftungsanlage;
- Fig. 2: einen Teil einer Belüftungs- und Entlüftungsanlage im Längsschnitt gemäß der Linie II-II in Fig. 1;
- Fig. 3: einen Teil einer alternative Ausführungsform der Belüftungs- und Entlüftungsanlage in einem Längsschnitt der prinzipiell mit dem in Fig. 2 dargestellten Längsschnitt vergleichbar ist; und
- Fig. 4: zwei prinzipmäßig dargestellte Strömungsprofile der von einer Luftfördereinrichtung geförderten Luft.

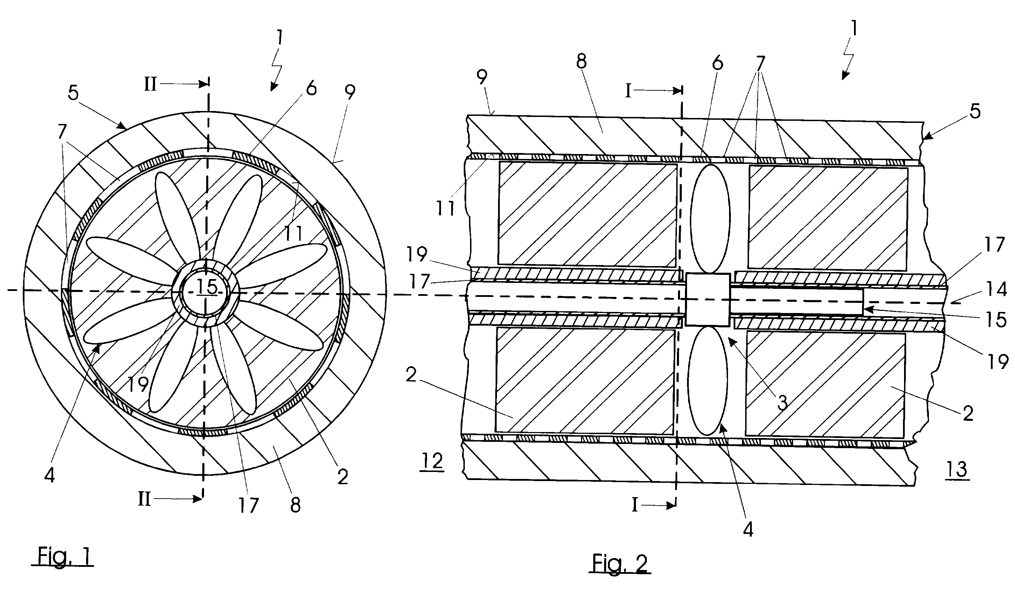

In Fig. 1 ist ein Querschnitt durch die Belüftungs- und Entlüftungsanlage 1 erkennbar. Für das Ausführungsbeispiel wurde eine zylindrische Bauform der Belüftungs- und Entlüftungsanlage gewählt. Neben mehreren Wärmespeicherelementen 2 weist die Belüftungs- und Entlüftungsanlage 1 eine Luftfördereinrichtung 3 mit einem runden, axial wirkenden Flügelrad 4 auf. Die Wärmespeicherelemente 2 sind dabei in Fig. 1 nur durch ihre prinzipiell mögliche Lage angedeutet, wobei ihre Ausführung in geometrisch beliebiger Form erfolgen kann. Allerdings sind radial angeordnete Rippen oder spiralförmig ausgeführte Teile (nicht dargestellt) als Wärmespeicherelemente 2 besonders günstig, da sie in der Lage sind, zusätzlich als Schall-Leitelemente zu dienen und die Schallwellen sowohl nach Außen als auch nach Innen abzuleiten.

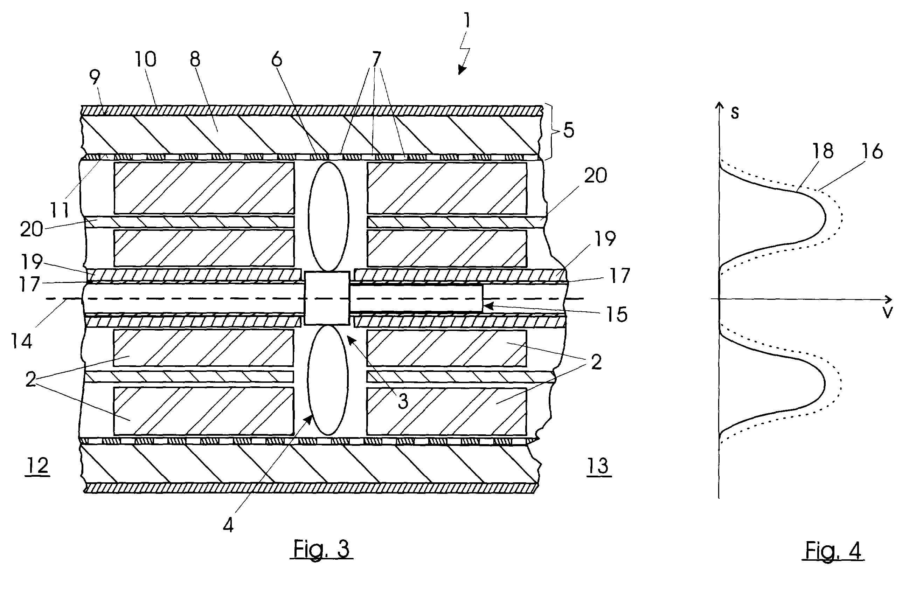

In Fig. 1 und Fig. 2 besteht ein äußeres Gehäuse 5 der Belüftungs- und Entlüftungsanlage 1 aus mehreren Teilen, deren Innerstes ein Innengehäuse 5 mit zahlreichen Öffnungen 7 ist. In bevorzugter Art und Weise kann das Innengehäuse 6 als lochblechartiges Teil oder in Form einer Gitterstruktur ausgeführt sein.

An das Innengehäuse 6 schließt sich außen ein schallabsorbierendes Gehäuseelement 8 an. Die Öffnungen 7 in dem Innengehäuse 6 dienen dabei als akustische Verbindung von dem inneren Bereich, den das Gehäuse 5 teilweise umschließt, zu dem Gehäuseelement 8.

Die äußere Oberfläche 9 des schallabsorbierenden Gehäuseelements 8 kann dabei aus einer direkt auf der äußeren Oberfläche 9 aufgebrachten Schutzschicht, z.B. einer Lackschicht, oder aus einem dünnen Gehäuseteil 10 (in Fig. 3 dargestellt) bestehen. Dabei sollte sichergestellt sein, daß die auf der äußeren Oberfläche 9 aufgebrachte Schutzschicht oder das dünne Gehäuseteil 10 einen ausreichend großen Widerstand gegen mechanische Beschädigungen bei der Montage und gegen Feuchtigkeit und andere Umwelteinflüsse gewährleistet.

Direkt anschließend an die äußerste Schicht des Gehäuses 5 umgibt die Gebäudewand (nicht dargestellt) die Belüftungs- und Entlüftungsanlage 1.

Das Gehäuseelement 8 kann aus verschiedenen Materialien mit schallabsorbierenden Eigenschaften bestehen. Besonders gut geeignet sind schallabsorbierende Matten, die auf einer nach der Montage des schallabsorbierende Gehäuseelements 8 nach innen gewandten Oberfläche 11 spezielle Strukturen aufweisen. Diese bei Material mit schallabsorbierenden Eigenschaften allgemein bekannten, die Oberfläche 11 vergrößernde Strukturen, sogenannte Kulissen, helfen den Schall zu absorbieren.

Insbesondere bei der in Fig. 3 dargestellten Ausführungsform der Belüftungs- und Entlüftungsanlage 1 mit einem äußeren Gehäuseteil 10 ist es auch denkbar in den Zwischenraum zwischen Innengehäuse 6 und äußerem Gehäuseteil 10 ein schallabsorbierendes Schüttgut, z.B. Flocken etc., einzufüllen, welches dann das schallabsorbierende Gehäuseelement 8 bildet. In diesem speziellen Fall wäre dann in idealer Weise eine Gitterstruktur für das Innengehäuse 6 zu wählen.

Durch die beschriebenen Öffnungen 7 des Innengehäuses 6 gelangen nun die Schallwellen an die sie absorbierende Oberfläche 11 des Gehäuseelements 8. Zusätzlich können noch Schall-Leitelemente (nicht dargestellt) an dem Innengehäuse 6 angebracht sein, welche die Schallwellen durch die Öffnungen 7 zu dem schallabsorbierenden Gehäuseelement 8 leiten.

Im Inneren des Gehäuses 5 ist die Luftfördereinrichtung 3 mit dem prinzipmäßig angedeuteten Flügelrad 4 erkennbar, welche Luft in axialer Richtung durch die Belüftungs- und Entlüftungsanlage 1 fördert.

Wie bei den meisten Belüftungs- und Entlüftungsanlagen 1 erfolgt auch hier eine alternierende Be- und Entlüftung eines Innenraums 12 durch die Luftfördereinrichtung 3. Das bedeutet, daß die Luftfördereinrichtung 3 für ein bestimmtes Zeitintervall verbrauchte Luft von dem Innenraum 12 zu einem Außenbereich 13 fördert. Bei dem Betrieb während der winterlichen Heizperiode, bzw. immer dann wenn die Lufttemperatur im Innenraum 12 über der im Außenbereich 13 liegt, gibt die nach außen geförderte, verbrauchte Luft den größten Teil ihrer Wärmeenergie an die Wärmespeicherelemente 2 ab. Die in idealer Weise radial zur Drehachse 14 des Flügelrads 4 angeordneten Wärmespeicherelemente 2 nehmen die Wärme auf und speichern sie.

Nach Ablauf des Entlüftungs-Zeitintervalls kehrt sich die Laufrichtung des Flügelrads 4 um. Damit wird nun frische Luft von dem Außenbereich 13 in den Innenraum 12 gefördert. Die Luft strömt dabei durch die Wärmespeicherelemente 2 und nimmt die dort gespeicherte Wärme wieder auf, so daß in dem Innenraum 12 angewärmte Frischluft aus der Belüftungs- und Entlüftungsanlage 1 strömt.

Selbstverständlich sind auch weitere Ausführungsformen der Luftfördereinrichtung 3 denkbar, insbesondere solche mit getrennten Flügelrädern 4, eines für die Belüftung und ein anderes für die Entlüftung. Auch Flügelräder 4 welche mit dem einen Bereich ihrer Flügel eine andere Strömungsrichtung als mit einem anderen Bereich ihrer Flügel realisieren sind einsetzbar.

Ebenso kann die Erfindung bei Belüftungs- und Entlüftungsanlagen 1 mit sogenanntem rekuperativen Wärmetauscher, z.B. einem Kreuzstromwärmetauscher, eingesetzt werden. Diese Wärmetauscher zeichnen sich dadurch aus, daß die Luftströmung in die eine Richtung durch die Wärmespeicherelemente 2 von der Luftströmung in die andere Richtung getrennt wird.

Bei Belüftungs- und Entlüftungsanlagen 1 dieser Bauart, muß also immer ein Zuluftstrom und ein Abluftstrom gleichzeitig vorhanden sein.

Eine Antriebseinheit 15 der Luftfördereinrichtung 3 ist bei der dargestellten zylindrischen Ausführungsform der Belüftungs- und Entlüftungsanlage 1 zentral in dem Bereich der Drehachse 14 des Flügelrads 4 angebracht.

In Fig. 4 sind in einem Weg(s)-Geschwindigkeit(v)-Diagramm zwei verschiedene Strömungsprofile dargestellt. Die punktierte Linie zeigt dabei ein Strömungsprofil 16 wie es von dem axial fördernden Flügelrad 4 erzeugt wird, ohne daß eine Beeinflussung durch Gehäuseelemente etc. besteht. Deutlich erkennbar ist, daß in dem Bereich der zentral angeordneten Antriebseinheit 15 nur geringe Strömungsgeschwindigkeit herrscht. Man kann in diesem Bereich ohne energetische Verluste eine durch die wenigstens annähern gesamte Belüftungs- und. Entlüftungsanlage 1 laufende Hülse 17 anordnen, die neben der Antriebseinheit 15 sämtliche zur Steuerung und Regelungen der Belüftungs- und Entlüftungsanlage 1 erforderlichen Elektronik-Bauteile, Steuerelemente und Regelelemente aufnehmen kann. Man erhält damit das energetisch eher bessere Strömungsprofil 14 (durchgezogene Linie), da keine druckverlusterzeugende Erweiterung des Strömungsprofils 14 erfolgt.

Das dargestellte Strömungsprofil 14 wird sich in etwa bei einer Anlage gemäß Fig. 1 und Fig. 2 einstellen.

In besonders günstiger Weise kann eine Hülle 19 um die Hülse 17 ganz oder zu ihrem wenigstens annähernd größten Teil aus einem Material mit schallabsorbierenden Eigenschaften bestehen. Dadurch wird in der Belüftungs- und Entlüftungsanlage 1 zusätzlich weitere schallabsorbierende Oberfläche geschaffen. Falls die Stabilität oder die Materialeigenschatten des schallabsorbierenden Materials dies erforderlich machen, kann die Hülle 19 mit einer Gitterstruktur oder einem lochblechartigen Teil verstärkt werden. Durch die geeignete Materialwahl und Anordnung der Verstärkungen, z.B. eine Außenhaut mit zahlreichen Löchern um die Hülle 19, können die Verstärkungen auch noch dazu beitragen den Strömungswiderstand in inneren der Belüftungs- und Entlüftungsanlage 1 zu senken.

Wenn nun Blechrippen, die gleichermaßen als Schall-Leitelemente und Wärmespeicherelemente 2 dienen, radial zwischen der Hülle 19 und dem Innengehäuse 6 angeordnet sind werden die in der Belüftungs- und Entlüftungsanlage 1 befindlichen Schallwellen ideal zu der schallabsorbierenden Hülle 19 einerseits und zu dem schallabsorbierenden Gehäuseelement 8 andererseits abgeleitet.

Sollten aufgrund extremer Bedingungen in der äußeren Umgebung, z.B. das Gebäude liegt dicht an einer stark befahrenen Straße, eine noch größere Dämpfung des Außenschalls erforderlich sein, als dies durch die Hülle 19 und das schallabsorbierende Gehäuseelement 8 ohnehin gegeben ist, so können weitere schallabsorbierende Elemente 20 in die Belüftungs- und Entlüftungsanlage 1 eingesetzt werden.

Die in Fig. 3 dargestellte Ausführungsform der Belüftungs- und Entlüftungsanlage 1 weist solche, zylindrisch ausgeführte schallabsorbierende Elemente 20, hier insbesondere Röhren 20, auf. Sie sind zentrisch um die Drehachse 14 des Flügelrads 4 angeordnet, was lediglich eine leichte Modifikation der Wärmespeicherelemente 2 erfordert. Sollte das schallabsorbierende Material nicht die erforderliche mechanische Festigkeit für die schallabsorbierenden Röhren 20 aufweisen, können analog zu dem Gehäuse 5 und der Hülle 19 Gitterstrukturen oder lochblechartige Teile zur mechanischen Verstärkung eingesetzt werden.

In einer besonders günstigen, in den Figuren nicht zu erkennenden Ausführungsform können die Wärmespeicherelemente 2, welche gleichzeitig als Schall-Leitelemente dienen, an ihrer jeweiligen Oberfläche eine an sich bekannte Mikroperforation aufweisen und so den Außenschall absorbieren, welcher in die Belüftungs- und Entlüftungsanlage 1 gelangt.

Neben den Wärmespeicherelementen 2 oder den Schall-Leitelementen können auch die Außenhaut der Hülle 19 sowie die äußere Oberfläche 9 des schallabsorbierenden Gehäuseelements 8 mit der entsprechenden Mikroperforation zur Absorption von Schall versehen sein.

Selbstverständlich weist die Belüftungs- und Entlüftungsanlage 1 an ihren dem Innenraum 12 bzw. dem Außenbereich 13 zugewandten und nicht dargestellten seitlichen Enden die dort üblichen und aus dem Stand der Technik bekannten Elemente, wie z.B. Gitter, Filter, Abdeckungen, etc., auf.

## Patentansprüche

1. Belüftungs- und Entlüftungsanlage, insbesondere mit Wärmespeicherelementen, wobei die Belüftungs- und Entlüftungsanlage wenigstens ein Gehäuse und wenigstens eine Luftfördereinrichtung aufweist,
**dadurch gekennzeichnet**, daß
das Gehäuse (5) wenigstens ein akustisch mit dem Innenbereich des Gehäuses (5) verbundenes Gehäuseelement (8) aufweist, wobei das Gehäuseelement (8) ganz oder zu seinem wenigstens annähernd größten Teil aus einem Material mit schallabsorbierenden Eigenschaften besteht.

2. Belüftungs- und Entlüftungsanlage nach Anspruch 1,
**dadurch gekennzeichnet**, daß
das Gehäuse (5) wenigstens annähernd zylindrisch ausgebildet ist.

3. Belüftungs- und Entlüftungsanlage nach Anspruch 1 oder 2,
**dadurch gekennzeichnet**, daß
das Gehäuse (5) ein mit zahlreichen als akustische Verbindung dienenden Öffnungen (7) versehenes Innengehäuse (6) aufweist.

4. Belüftungs- und Entlüftungsanlage nach Anspruch 3,
**dadurch gekennzeichnet**, daß
das Gehäuseelement (8) das Innengehäuse (6) an dessen Umfang wenigstens annähernd ganz umschließt, und daß das Gehäuseelement (8) an seinem Umfang mit einer umweltresistenten Außenschicht (9,10) versehen ist.

5. Belüftungs- und Entlüftungsanlage nach Anspruch 3 oder 4,
**dadurch gekennzeichnet**, daß
das Innengehäuse (6) an seiner inneren Wandung Schall-Leitelemente aufweist.

6. Belüftungs- und Entlüftungsanlage nach einem der Ansprüche 1 bis 5,
**dadurch gekennzeichnet**, daß
die Luftfördereinrichtung (3) wenigstens ein Flügelrad (4) und eine zentral um die Drehachse (14) des Flügelrads (4) angeordnete Antriebseinheit (15) mit einer Hülle (19) aufweist, wobei die Hülle (19) ganz oder zu ihrem annähernd größten Teil aus einem Material mit schallabsorbierenden Eigenschaften besteht.

7. Belüftungs- und Entlüftungsanlage nach Anspruch 6,
**dadurch gekennzeichnet**, daß
die Hülle (19) wenigstens annähernd zylindrisch ausgebildet ist und sich in Richtung der Drehachse (14) des Flügelrads (4) über den größten Teil des Gehäuses (5) erstreckt.

8. Belüftungs- und Entlüftungsanlage nach Anspruch 6 oder 7,
**dadurch gekennzeichnet**, daß
die Hülle (19) an ihrer der Antriebseinheit (15) abgewandten Oberfläche eine mit zahlreichen Öffnungen versehene Außenhaut aufweist.

9. Belüftungs- und Entlüftungsanlage nach Anspruch 6, 7 oder 8,
**dadurch gekennzeichnet**, daß
radial zur Drehachse (14) des Flügelrads (4) zwischen der Hülle (19) und dem Gehäuse Schall-Leitelemente angeordnet sind.

10. Belüftungs- und Entlüftungsanlage nach einem der Ansprüche 6 bis 9,
**dadurch gekennzeichnet**, daß
in Richtung der Drehachse (14) des Flügelrads (4) vor und/oder hinter dem Flügelrad (4) wenigstens annähernd zylinderförmige Elemente (20) aus einem schallabsorbierenden Material axial um die Drehachse (14) des Flügelrads (4) angeordnet sind.

11. Belüftungs- und Entlüftungsanlage nach Anspruch 5 oder 9,
**dadurch gekennzeichnet**, daß
die Schall-Leitelemente als Wärmespeicherelemente (2) vorgesehen sind.

12. Belüftungs- und Entlüftungsanlage nach einem der Ansprüche 1 bis 11,
**dadurch gekennzeichnet**, daß
das Material mit den schallabsorbierenden Eigenschaften zumindest in Teilbereichen seiner Oberfläche eine Mikroperforation zur Absorption von Schall aufweist.

13. Belüftungs- und Entlüftungsanlage nach einem der Ansprüche 5 bis 12,
**dadurch gekennzeichnet,** daß
die Schall-Leitelemente an ihrer Oberfläche eine Mikroperforation zur Absorption von Schall aufweisen.
